# EUROPEAN PATENT APPLICATION

(11) **EP 4 748 572 A1**
(43) Date of publication of application: **27.05.2026**
(21) Application number: 24842407.9
(22) Date of filing: 18.07.2024
(51) Int. Cl.: B41F 15/36, B41C 1/14

(54) **PRINTING SCREEN AND METHOD FOR MAKING SCREEN FOR SCREEN PRINTING**

(30) Priority: 18.07.2023 CN 202321893738 U; 12.07.2024 CN 202410935648
(71) Applicant: Makeblock Co., Ltd., Shenzhen, Guangdong 518000 (CN)
(72) Inventor: ZHAO, Zuoliang, Shenzhen, Guangdong 518000 (CN)
(74) Representative: Studio Torta S.p.A.
(86) International application number: PCT/CN2024/106087
(87) International publication number: WO 2025/016419

(57) **Abstract**

Disclosed are a printing mesh and a method for making a screen printing plate. The printing mesh includes a screen and a removable material that can be removed under the action of electromagnetic energy, where the screen can be completely or partially retained under the action of the electromagnetic energy. The screen has mesh openings filled with the removable material. The removable material covers a surface of the screen to form a removable layer. During plate making, the electromagnetic energy can be directly applied to a predetermined area of the printing mesh to remove the removable material in the area, so that a required pattern can be directly formed on the printing mesh to complete the plate making. Therefore, the plate making for the printing mesh is simpler and more convenient, with an uncomplicated plate-making process, making it particularly suitable for individual plate-making operations.

## Description

The present application claims priority to Chinese Patent Application No. 2023218937386, entitled "PRINTING MESH AND SCREEN PRINTING PLATE", and Chinese Patent Application No. 2024109356481, entitled "METHOD, TERMINAL DEVICE, AND SYSTEM FOR MAKING SCREEN PRINTING PLATE", some or all of the contents of which are incorporated herein by reference.

### TECHNICAL FIELD

The present application relates to the technical field of screen printing, and in particular, to a printing mesh and a method for making a screen printing plate.

### BACKGROUND

The screen printing process is an ancient craft that has been widely used in people's production and daily life. Currently, in the process of making a screen printing plate, a photosensitive emulsion is generally coated onto a screen mesh, then the photosensitive emulsion is heated and cured on the screen mesh, and subsequently, the photosensitive emulsion on the screen mesh is exposed by means of film exposure and washed with water to obtain a screen printing pattern. The entire plate-making process requires a lot of time to perform steps such as screen stretching, photosensitive emulsion coating, drying, screen exposure, and washing, resulting in complex operations and a lengthy workflow.

### SUMMARY

The present application provides a printing mesh and a method for making a screen printing plate. During plate making, electromagnetic energy can be directly applied to a predetermined area of the printing mesh to remove the removable material in the area. Thus, a predetermined pattern can be directly formed on the printing mesh, resulting in high plate-making efficiency and short plate-making time.

In a first aspect, embodiments of the present application provide a printing mesh, including a screen and a removable material, where the removable material can be completely removed under the action of electromagnetic energy, and the screen can be completely or partially retained under the action of the electromagnetic energy; and
the screen has mesh openings filled with the removable material, and the removable material covers a surface of the screen to form a removable layer.

In a second aspect, embodiments of the present application further provide a printing mesh, including a screen and a removable material, where the removable material can be completely removed under the action of electromagnetic energy, and the screen can be completely or partially retained under the action of the electromagnetic energy; and
the screen has mesh openings filled with the removable material, or the removable material covers a surface of the screen to form a removable layer.

In the printing mesh, the screen is a metal screen.

In the printing mesh, the removable material is a photosensitive resin material.

In the printing mesh, the electromagnetic energy is laser.

In the printing mesh, a melting point, an ignition point, or a sublimation point of the screen is higher than a melting point, an ignition point, or a sublimation point of the removable material.

In the printing mesh, the screen has an upper surface and a lower surface which are in communication through the mesh openings, and the removable layer is laminated on the upper surface and the lower surface.

In the printing mesh, the screen has an upper surface and a lower surface which are in communication through the mesh openings, and the removable layer is laminated on the upper surface or the lower surface.

In the printing mesh, the printing mesh further includes an edge-wrapping structure, where the edge-wrapping structure wraps an edge of the printing mesh.

In a third aspect, embodiments of the present application further provide a printing mesh, including a screen, a first material, and a second material, where the first material can be completely removed under the action of electromagnetic energy, the second material can be dissolved by a solvent and covers a surface of the screen, and the first material is laminated on a surface of a layer structure formed by the second material.

In a fourth aspect, embodiments of the present application further provide a printing mesh, which is a single-layer mesh structure made of a material that can be removed by electromagnetic energy.

In a fifth aspect, embodiments of the present application further provide a method for making a screen printing plate, including:
providing a printing mesh, where the printing mesh includes a screen and a removable material attached to the screen, the removable material can be removed under the action of electromagnetic energy, and the screen can be completely or partially retained under the action of the electromagnetic energy;
providing an energy apparatus, where the energy apparatus is provided with an energy head capable of emitting the electromagnetic energy; and
operating the printing mesh by using the energy apparatus: placing the printing mesh in a processing area of the energy apparatus, and moving the energy head along a predetermined movement path on a surface of the printing mesh to remove at least part of the removable material attached to the screen, thereby forming a predetermined pattern on the printing mesh.

In the method for making a screen printing plate, prior to step of moving the energy head along a predetermined movement path on a surface of the printing mesh, the method further includes: obtaining the predetermined pattern via a terminal device connected to the energy apparatus or a storage unit inside the energy apparatus; and generating the movement path based on the predetermined pattern.

In the method for making a screen printing plate, prior to step of moving the energy head along a predetermined movement path on a surface of the printing mesh, the method further includes: adjusting an action point of the electromagnetic energy based on a distance between the energy head and the printing mesh and/or the thickness of the printing mesh, and the thickness of a surface material of the printing mesh.

In the method for making a screen printing plate, prior to step of operating the printing mesh by using the energy apparatus, the method further includes: providing a screen stretching frame, and tensioning and securing the printing mesh in the screen stretching frame.

In the method for making a screen printing plate, the energy apparatus is a laser processing equipment, and the energy head is a movable laser processing head.

In the method for making a screen printing plate, the laser processing equipment processes the printing mesh with laser having a wavelength of 400 nm to 10.6 µm.

In the method for making a screen printing plate, the size of a light spot formed by the laser processing equipment on the printing mesh does not exceed 0.08 mm².

In the method for making a screen printing plate, in step of moving the energy head along a predetermined movement path on a surface of the printing mesh, a movement speed of the laser processing head is greater than 80 mm/s.

In the method for making a screen printing plate, power of the laser processing equipment is below 100 W.

In the method for making a screen printing plate, the laser processing equipment includes processing modes of laser planar processing, laser curved surface processing, and laser screen printing plate making; and
prior to step of moving the energy head along a predetermined movement path on a surface of the printing mesh, the method further includes:
selecting a laser processing mode: selecting the processing mode of the laser planar processing or the laser screen printing plate making to operate the printing mesh.

In the method for making a screen printing plate, after step of selecting a laser processing mode, the method further includes: configuring power and speed of laser processing based on the laser processing mode.

Compared with the prior art, the printing mesh and the method for making a screen printing plate according to the present application have the characteristic that the printing mesh can be operated by using the energy apparatus. Specifically, the energy apparatus is provided with an energy head capable of emitting electromagnetic energy; and the printing mesh includes a screen permeable to coating, and a removable material attached to the screen, where the removable material can be removed under the action of the electromagnetic energy, and the screen can be retained. Thus, when the energy head of the energy apparatus moves along a predetermined movement path on a surface of the printing mesh, a predetermined pattern can be directly formed on the printing mesh, resulting in high plate-making efficiency and short plate-making time.

Therefore, the plate making for the printing mesh in the present application is simpler and more convenient, with an uncomplicated plate-making process, making it particularly suitable for individual plate-making operations.

The method for making a screen printing plate in the present application can achieve automated screen printing plate making. The plate making features a simple and fast process, can be independently completed by a user anywhere, and is low in cost with high efficiency and precision.

### BRIEF DESCRIPTION OF THE DRAWINGS

FIG. 1 is a schematic structural diagram of a screen according to an embodiment;
FIG. 2 is a schematic structural diagram of a printing mesh according to an embodiment;
FIG. 3 is a schematic structural diagram of a printing mesh according to another embodiment;
FIG. 4 is a schematic structural diagram of a printing mesh according to yet another embodiment;
FIG. 5 is a schematic structural diagram of a printing mesh according to a further embodiment;
FIG. 6 is a schematic structural diagram of a printing mesh according to a fifth embodiment;
FIG. 7 is a schematic structural diagram of a printing mesh according to a sixth embodiment;
FIG. 8 is a schematic structural diagram of an edge of a printing mesh according to an embodiment;
FIG. 9 is a schematic structural diagram of an edge of a printing mesh according to another embodiment;
FIG. 10 is a schematic structural diagram of a screen printing plate according to an embodiment;
FIG. 11 is a schematic flowchart of a method for making a screen printing plate according to an embodiment;
FIG. 12 is a specific flowchart of step S30 in a method for making a screen printing plate shown in FIG. 1;
FIG. 13 is a schematic structural diagram of an energy apparatus in a method for making a screen printing plate according to an embodiment;
FIG. 14 is a schematic structural diagram of a terminal device for making a screen printing plate according to an embodiment;
FIG. 15 is a first schematic diagram of a control interface of a system for making a screen printing plate according to an embodiment;
FIG. 16 is a second schematic diagram of a control interface of a system for making a screen printing plate according to an embodiment; and
FIG. 17 is a third schematic diagram of a control interface of a system for making a screen printing plate according to an embodiment.

**Reference numerals are described as follows:**
10-printing mesh;
100-screen;
110-mesh opening;
200-removable material;
210-removable layer;
300-edge-wrapping structure;
400-first material;
500-second material;
20-screen printing plate;
201-screen frame;
30-energy apparatus;
301-energy head;
302-processing area;
40-terminal device;
401-processor; and
402-memory.

### DETAILED DESCRIPTION OF THE EMBODIMENTS

The present application provides a printing mesh and a method for making a screen printing plate. To make the objectives, technical solutions, and effects of the present application clearer and more definite, the following provides a further detailed description of the present application with reference to the drawings and by way of embodiments. It should be understood that the specific embodiments described herein are only for explaining the present application and are not intended to limit the present application.

A printing mesh 10 according to the embodiments of the present application includes a screen 100 and a removable material 200. The screen 100 can be completely or partially retained under the action of electromagnetic energy. The removable material 200 can be removed under the action of the electromagnetic energy.

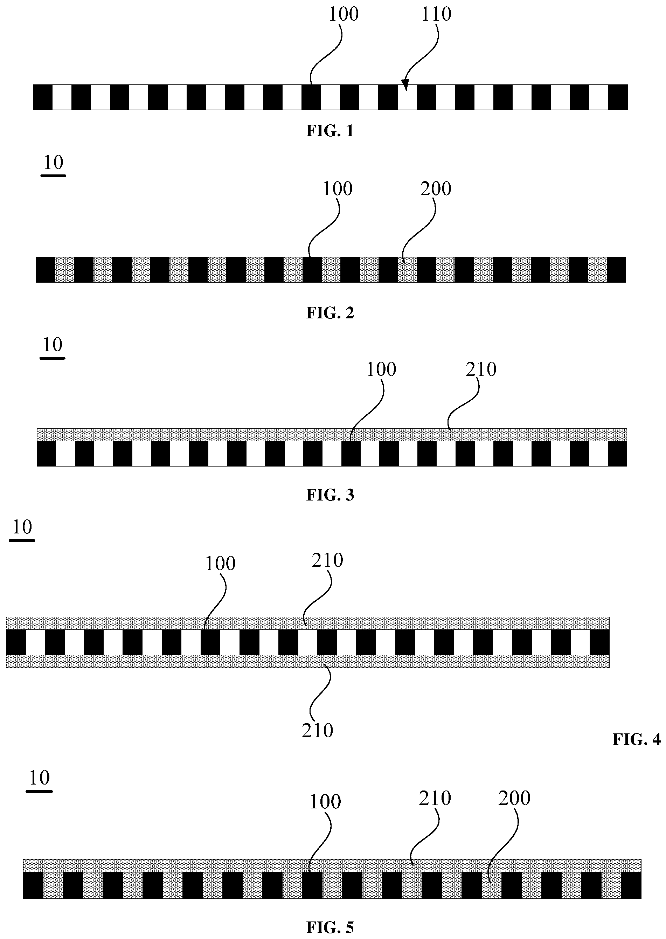

Referring to FIG. 1, the screen 100 is a mesh structure made of a material permeable to ink, and has mesh openings 110. A mesh count of the screen 100 may be appropriately selected based on the resolution required by a corresponding printed pattern, the ink used, and a printing object.

The screen 100 may be made of a metal material. For example, the screen 100 may be made of a stainless steel material. Alternatively, the screen 100 may also be made of a nylon filament material, a resin material, or the like. The thickness of the screen 100 is generally less than 300 µm.

In an embodiment, the screen 100 is a stainless steel screen, which has an absorption rate of less than 40% for light with a wavelength below 10.6 µm at room temperature, and a transmittance approaching 0%.

The removable material 200 is a material that can be easily removed under the action of the electromagnetic energy. For example, the removable material 200 may be a photosensitive resin material. Alternatively, the removable material 200 is another polymer material, such as a polyurethane (PU) material or a polyvinyl chloride (PVC) material.

The electromagnetic energy acting on the removable material 200 may be laser, and the removable material 200 can be removed via laser irradiation. The laser may be of any required wavelength, including, for example, microwaves, infrared laser, visible laser, UV laser, X-ray laser, gamma-ray laser, etc.

In the present application, the method for removing the removable material 200 is not limited to the laser irradiation, and may also include other methods, such as using a computer numerical control machine to generate electromagnetic energy for acting on the removable material 200. Such a computer numerical control machine may transfer electromagnetic energy to the removable material 200 on the screen 100 by generating high temperature or a light beam (visible light or invisible light) to achieve removal of the removable material 200. For example, the computer numerical control machine may control a needle-shaped heating rod, a light beam cutter, etc., to act on the removable material 200.

Preferably, the removable material 200 is a material that can be sublimated by laser irradiation. Alternatively, the removable material 200 may also be a material that can be burned to ashes by laser irradiation. Laser power is preferably below 100 W. For example, household desktop laser processing equipments usually have relatively low power, and their operating power is within this range. Industrial-grade laser cutting machines generally have relatively high power, and their use may cause damage to the screen 100 under the removable material 200, so caution should be exercised during use.

It should be understood that when laser is used to remove the removable material 200, light with a wavelength of 400 nm to 10.6 µm may be selected as the laser. Meanwhile, the screen 100 needs to meet the requirement of being not easily damaged by the laser. That is, the screen 100 needs to meet the requirement that the screen 100 can be completely or partially retained on the premise that the laser completely ablates and removes the removable material 200. Partial retention means that after laser irradiation, the screen 100 may be damaged to a certain extent, but can still withstand a pulling force without breaking.

Under normal circumstances, a relatively suitable choice is that a melting point of the material of the screen 100 is higher than a melting point of the removable material 200; an ignition point of the material of the screen 100 is higher than an ignition point of the removable material 200; or a sublimation point of the material of the screen 100 is higher than a sublimation point of the removable material 200. However, in a case where there is a significant difference in laser absorption rates between the material of the screen and the removable material, the melting point, the ignition point, or the sublimation point of the material of the screen 100 may be equal to or even lower than the melting point, the ignition point, or the sublimation point of the removable material 200.

Preferably, polyvinyl alcohol resin is selected as the removable material 200. In this example, since the stainless steel screen 100 has a lower absorption rate for the laser with the wavelength of 400 nm to 10.6 µm than the polyvinyl alcohol resin material, the stainless steel screen 100 can be completely retained when the laser is used to completely remove the polyvinyl alcohol resin material.

A printing mesh 10 according to an embodiment of the present application includes a screen 100 permeable to coating, and a removable material 200 arranged on the screen 100. The removable material 200 may be a material that can be coated onto the screen 100. The coating method includes, but is not limited to, scrape coating or spray coating. After being coated onto the screen 100, the removable material 200 can be fixed to the screen 100 by means of oven drying, air drying, or natural drying.

Alternatively, as another option, the removable material 200 may also be a material in a film form that can be attached to the screen 100. For example, a film made of the removable material 200 is adhered to the screen 100 via an adhesive.

The removable material 200 can be completely removed by laser processing, and the screen 100 can be completely or partially retained. During plate making, the laser can be directly used to irradiate a predetermined area of the printing mesh 10 to remove the removable material 200 on the screen 100 in the area, so that a required pattern can be directly formed on the printing mesh 10 to complete the plate making. Therefore, the plate making for the printing mesh 10 in the embodiments of the present application is simpler and more convenient, with an uncomplicated plate-making process, making it particularly suitable for individual plate-making operations.

Referring to FIG. 2, the removable material 200 can fill the mesh openings 110 of the screen 100. That is, the removable material 200 and the screen 100 can be fully combined to form a single-layer mesh structure. Specifically, the removable material 200 can be coated onto the screen 100, and the mesh openings 110 of the screen 100 are completely filled up with the removable material 200 by means of pressing or grinding, so that the removable material 200 is combined with the screen 100 to form a single-layer mesh structure. As a result, the overall thickness of the printing mesh 10 is small, which better facilitates a user to perform laser engraving on the printing mesh.

If the removable material 200 is a material in a film form such as PU or PVC, a possible processing method is to first attach the PU or PVC film onto the screen 100, and then perform heating to soften the PU or PVC material so that the material permeates into the screen 100 and is combined with the screen 100.

In some embodiments, as shown in FIG. 3, the removable material 200 may also be directly laminated on and cover a surface of the screen 100 to form a removable layer 210. As shown in FIG. 4, the removable material 200 can be laminated on and cover an upper surface and/or a lower surface of the screen 100, and can form a removable layer 210 on the upper surface and/or the lower surface of the screen 100. Specifically, the removable layer 210 may be laminated on the upper surface of the screen 100 (as shown in FIG. 3). Alternatively, the removable layer 210 is laminated on the lower surface of the screen 100. Or, the removable layer 210 is laminated on the upper surface and the lower surface of the screen 100 (as shown in FIG. 4). Since the removable layer 210 is formed on the surface of the screen 100, the removable layer 210 serves to protect the screen 100, thereby enhancing the strength of the printing mesh 10 to a certain extent.

In this example, when the removable material 200 is laminated on the surface of the screen 100, it is possible that the removable material 200 partially permeates into and fills the mesh openings 110 of the screen 100. In this case, the removable material 200 has a part that covers the screen 100, and a part that fills the mesh openings 110. That is to say, while the removable material 200 is laminated on the surface of the screen 100 to form the removable layer 210, the removable material can also partially fill the mesh openings of the screen 100. In this case, the removable material 200 may fill some of the mesh openings 110 of the screen 100, and/or the removable material 200 may fill some areas of the mesh openings 110 of the screen 100.

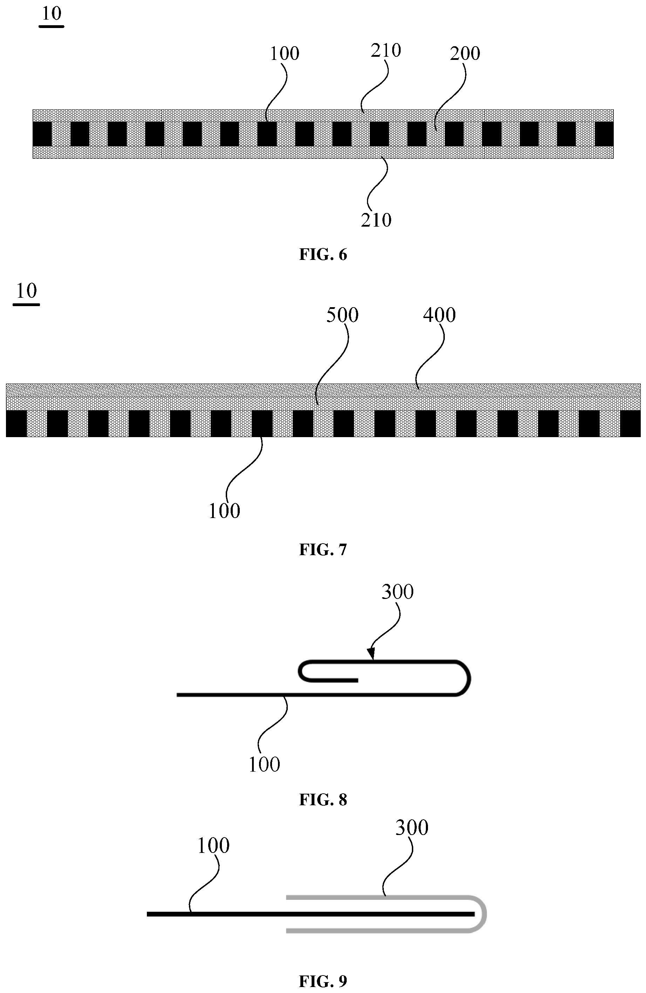

Referring to FIG. 5 and FIG. 6, for the printing mesh 10 in some embodiments, the removable material 200 completely fills up the mesh openings 110 of the screen 100, while the removable material 200 covers the upper surface and/or the lower surface of the screen 100 to form the removable layer 210. Thus, since the removable layer 210 is added on the surface of the screen 100, the removable layer 210 serves to protect the screen 100, thereby enhancing the strength of the printing mesh 10 to a certain extent.

In the present application, the removable material 200 should be able to be attached tightly to the screen 100. During actual use, the removable material 200 should be able to withstand a frictional force from a squeegee capable of transferring a liquid (such as ink) below the screen 100 without being damaged.

Referring to FIG. 7, some embodiments of the present application further provide a printing mesh 10, including a screen 100, a first material 400, and a second material 500. The second material 500 covers a surface of the screen 100. The first material 400 is laminated on a surface of a layer structure formed by the second material 500. The first material 400 is a material that can be removed by electromagnetic energy (such as laser). It can also be understood that the first material 400 in this embodiment is the aforementioned removable material 200. The second material 500 is a material that can be removed by means of dissolution in water or other solvents. Specifically, during plate making, laser can be used to remove the first material 400 along a predetermined path on the screen, and then water or another solvent can be used to remove the second material 500 along the path, thereby exposing the screen 100.

An embodiment of the present application further provides a printing mesh 10, which is a single-layer structure made of a material that can be removed by electromagnetic energy (such as the aforementioned removable material 200). During plate making, energy such as laser can be used to directly form a required pattern on the mesh by means of localized breakdown (e.g., perforation).

In the various embodiments of the present application, the printing mesh 10 may exist in the form of a single mesh. Alternatively, the printing mesh 10 may also be made in the form of a roll.

In some embodiments, an edge of the printing mesh 10 may be provided with an edge-wrapping structure 300. The edge-wrapping structure 300 can wrap the edge of the printing mesh 10 to prevent cutting or pricking a user. There may be various ways to form the edge-wrapping structure 300. Referring to FIG. 8, the edge-wrapping structure 300 may be formed by directly folding the edge of the screen 100 inward.

Alternatively, as shown in FIG. 9, the edge-wrapping structure 300 may also be formed by wrapping the edge of the screen 100 with another material. In this example, the another material wrapping the edge of the screen 100 may be a material such as plastic, varnish, or fabric.

The printing mesh 10 in the embodiments of the present application can be made by the following steps.

First, a screen 100 is provided, such as a stainless steel screen.

Then, an adhesive is applied to the screen 100. The removable material 200 being a material that can be coated onto the screen 100 is used as an example. The removable material 200 is coated onto the screen 100 from one side of the screen 100. The removable material 200 may completely or partially fill mesh openings 110 of the screen 100. The coating method in this step includes, but is not limited to, preparing the removable material 200 into a semi-fluid state and applying the material to the screen 100 by scraping. Alternatively, the coating method may also be spray coating.

In this case, there are two possible situations: when the removable material 200 completely fills up the mesh openings 110 of the screen 100, the screen 100 does not continue being coated, and the single-layer mesh structure can be directly obtained. Certainly, the removable material 200 may also continue being coated onto the screen 100, so that the removable material 200 covers a surface of the screen 100 to form a removable layer 210. In this case, the printing mesh 10 has a two-layer structure with the screen 100 and the removable layer 210.

When the removable material 200 partially fills the mesh openings 110 of the screen 100, the removable material 200 continues being coated onto the screen 100, so that the removable material 200 forms a removable layer 210 on the surface of the screen 100. In this case, the printing mesh 10 has a two-layer structure with the screen 100 and the removable layer 210.

Further, the removable material 200 may also be coated onto the surface of the screen 100 from the other side of the screen 100, so as to form a removable layer 210 on the other surface of the screen 100. In this case, the printing mesh 10 has a three-layer structure with the screen 100 and two removable layers 210 respectively arranged on two sides of the screen 100.

Certainly, if necessary, an additional removable material 200 may be further laminated on each of the above removable layers 210.

Alternatively, other washable materials or materials that can be removed by other means are laminated as needed.

In addition, if needed, laser can be used to irradiate the printing mesh 10 to form a printing mesh 10 with a predetermined pattern. Thus, the user can use the printing mesh 10 to print desired patterns on various substrates. Certainly, the patterns mentioned here are not limited to graphic images, but also include texts, lines, graphic-text designs, and other expressive forms with a strong sense of design.

When the printing mesh 10 in the present application is used for laser plate-making, laser can be used to irradiate the printing mesh 10 along a predetermined path, so that the laser can ablate and remove all the removable material 200 on the screen 100 along the predetermined path, thereby forming a printable printing mesh 10 with a predetermined pattern. The predetermined pattern may be one that the user uploads or copies to a laser engraving/cutting machine, or the predetermined pattern may be drawn in real time by the user on a terminal device such as a computer, a tablet, or a mobile phone connected to the laser engraving/cutting machine.

The predetermined path may be a movement path of a laser processing head generated based on the predetermined pattern. The movement path may be generated in the terminal device connected to the laser engraving/cutting machine. Alternatively, the movement path may also be generated in a processing unit inside the laser engraving/cutting machine.

For users who own the laser engraving/cutting machine, they only need to place the printing mesh 10 in a processing area of the laser processing equipment, select a desired pattern in a computer terminal connected to the laser processing equipment, and start the laser processing equipment to process the printing mesh 10 based on the user-selected pattern. In this case, an engraving path of the laser processing equipment corresponds to the user-selected pattern. In this way, a screen printing plate with a user-expected pattern can be made, and then the user can use this screen printing plate to print desired patterns on various substrates. For example, the user may use a screen printing machine and a squeegee in combination to print the pattern onto a designated item via scrape coating of ink on the screen printing plate with the expected pattern.

Certainly, before this, the printing mesh 10 may be tensioned and secured in a screen frame, thereby facilitating the user to perform a laser engraving operation.

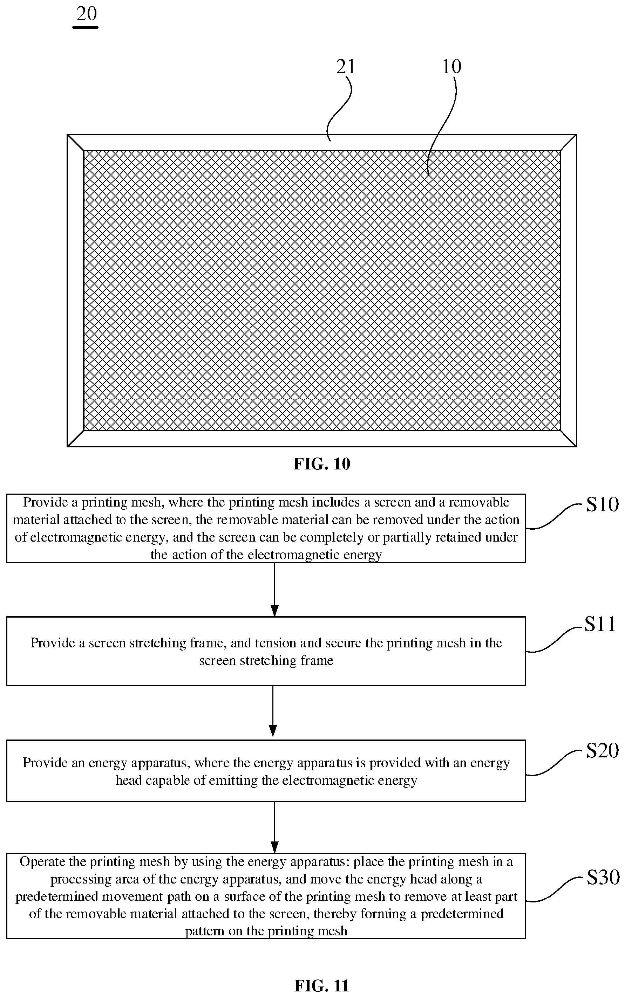

Referring to FIG. 10, the present application further provides a screen printing plate 20, including a screen frame 201 and the printing mesh 10 according to any one of the above embodiments, where the printing mesh 10 is tensioned in the screen frame 201.

The screen frame 201 may be a metal screen frame, a wooden screen frame, or a plastic screen frame. The shape of the screen frame 201 may be a rectangle, a circle, an oval, etc., and is not limited in the embodiments of the present application.

A circumferential edge of the printing mesh 10 is connected to an inner side of the screen frame 201, so that the printing mesh 10 can be tensioned and secured in the screen frame 201. The printing mesh 10 may be connected and fixed into the screen frame 201 by means of gluing, or the printing mesh 10 may be connected and fixed into the screen frame 201 in a detachable manner that fixing strips are connected to the screen frame 201 by screws.

Referring to FIG. 11, a method for making a screen printing plate according to the embodiments of the present application includes:

Step S10: providing a printing mesh 10. In this step, the printing mesh 10 is the printing mesh 10 according to any one of the above embodiments. The printing mesh 10 includes a screen 200 and a removable material 102 attached to the screen 200, where the removable material 102 can be removed under the action of electromagnetic energy, and the screen 200 can be completely or partially retained under the action of the electromagnetic energy.

Referring to FIG. 11, the method for making a screen printing plate further includes step S20: providing an energy apparatus 30. The energy apparatus 30 in this step is provided with an energy head 301 capable of emitting the electromagnetic energy. The electromagnetic energy may be laser, which is used to irradiate the removable material 102 so as to remove the removable material 102 from the screen 200.

In this embodiment, the laser may be of any required wavelength, including, for example, microwaves, infrared laser, visible laser, UV laser, X-ray laser, gamma-ray laser, etc.

Certainly, in other embodiments, the method for removing the removable material 200 is not limited to the laser irradiation, and may also include other methods, such as using a computer numerical control machine to generate electromagnetic energy for acting on the removable material 102. Such a computer numerical control machine may transfer electromagnetic energy to the removable material 102 on the screen 200 by generating high temperature or a light beam (visible light or invisible light) to achieve removal of the removable material 102. For example, the computer numerical control machine may control a needle-shaped heating rod, a light beam cutter, etc., to act on the removable material 102.

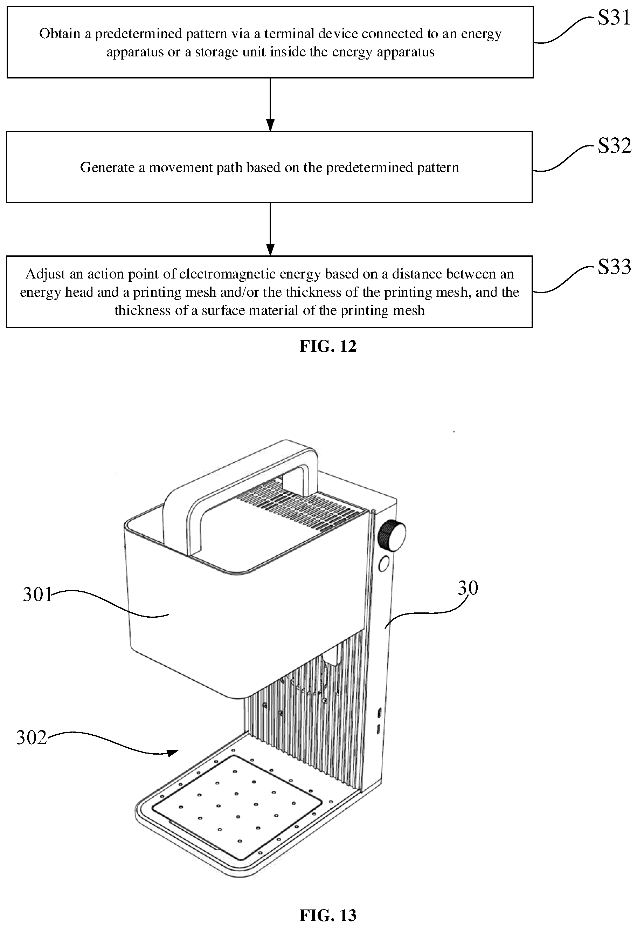

Referring to FIG. 13, in an embodiment, the energy apparatus 30 is a laser processing equipment. Preferably, the energy apparatus is a household consumer-grade laser processing equipment, which has lower power than an industrial-grade laser processing equipment. For example, the laser processing equipment is preferably a portable laser processing equipment with power below 100 W.

The laser processing equipment may use laser with a wavelength of 400 nm to 10.6 µm to process the printing mesh 10.

When the energy apparatus 30 is the laser processing equipment, the energy head 301 is a movable laser processing head. In an embodiment, the laser processing equipment includes at least processing modes of laser planar processing, laser curved surface processing, and laser screen printing plate making.

Prior to step of moving the energy head 301 along a predetermined movement path on a surface of the printing mesh 10, the method further includes: selecting a laser processing mode. Specifically, the processing mode of the laser planar processing or the laser screen printing plate making is selected to operate the printing mesh 10.

In the method for making a screen printing plate in this embodiment, the processing mode of the laser screen printing plate making or the laser planar processing needs to be selected to perform processing and plate making on the printing mesh 10.

Further, prior to processing and plate making on the printing mesh 10, the method further includes a parameter setting step. Specifically, after step of selecting a laser processing mode, the method further includes: configuring power and speed of laser processing based on the laser processing mode.

In this embodiment, prior to engraving the printing mesh 10 with laser, engraving parameters of the laser processing equipment need to be first determined, where the engraving parameters include power, speed and the like of laser processing. The engraving parameters may be manually input by a user, for example, specified parameters are input according to a product manual. The engraving parameters may also be preconfigured as recommended parameters in the laser processing equipment, allowing the user to directly select the recommended parameters. For example, after the user selects the processing mode of the laser screen printing plate making, the laser processing equipment automatically configures parameters suitable for engraving the mesh to make the screen printing plate. Alternatively, the laser processing equipment may preset recommended parameters corresponding to different materials, so that the user can select the different materials to automatically match the recommended parameters.

Since different printing meshes 10 may use different removable materials 102, or removable materials 102 with different thicknesses, the light absorbency, melting points, ignition points, sublimation points, etc. of the different removable materials 102 may vary. Therefore, for the different removable materials 102 of the printing mesh 10, or the removable materials 102 with the different thicknesses, different processing parameters are required, for example, different powers and speeds are selected.

The power of the laser processing equipment may be below 100 W. By way of example, the laser power of the laser processing equipment may be controlled within a range of 5 W to 95 W. A moving processing speed of the movable laser processing head may be greater than 80 mm/s. For example, the speed may be 100 mm/s, 150 mm/s, 200 mm/s, 500 mm/s, or even a higher speed. In addition, the processing speed is generally positively correlated with the laser power: the greater the laser power is, the higher the moving processing speed is. At high power, the required dwell time at a processing point on the surface of the mesh is shorter.

When the laser processes the printing mesh 10, the size of a light spot on the surface of the printing mesh 10 is controlled within 0.08 mm². Preferably, the size of the light spot is smaller than the size of mesh openings on the printing mesh 10, so as to achieve a more refined pattern engraving effect and ultimately achieve a more precise printing effect.

In an embodiment, the movement accuracy of the movable laser processing head may be less than 0.1 mm. Preferably, the movement accuracy of the movable laser processing head is less than 0.05 mm, for example, 0.01 mm. In this embodiment, high-precision laser plate-making processing can ensure that every detail in the plate-making process is perfectly captured, enabling precise reproduction of everything from tiny texts to complex patterns. This provides the user with an unparalleled detail reproduction capability, allowing complex and intricate designs to be perfectly transformed into physical entities. Even under a microscope, every corner of a stencil remains sharp and every edge is clearly continuous.

The processing area of the above-mentioned energy apparatus 30 may be located below the laser processing head on a worktable of the laser processing equipment. Alternatively, the processing area may also be located above the laser processing head, in which case a laser beam is emitted upward. Certainly, the processing area may also be located on a side of the laser processing head, in which case the laser beam is emitted horizontally. Preferably, the processing area is located below the laser processing head on the worktable of the laser processing equipment, and the laser beam is emitted vertically downward.

Certainly, in other embodiments, the energy apparatus 30 may also be a portable laser marking machine or another portable laser processing device. Alternatively, the energy apparatus 30 includes a bracket and a laser emission head, where the laser emission head is detachably connected to the bracket, the bracket includes an X-axis rail and a Y-axis rail, the X-axis rail is slidably arranged on the Y-axis rail, and the laser emission head is slidably arranged on the X-axis rail. During printing, the laser emission head is moved along an X axis and a Y axis, enabling the laser emission head to move along a predetermined movement path on the surface of the printing mesh 10.

Referring to FIG. 11, the method for making a screen printing plate further includes step S30: operating the printing mesh 10 by using the energy apparatus 30. In this step, the printing mesh 10 is first placed in the processing area of the energy apparatus 30, and then the energy head is moved along a predetermined movement path on the surface of the printing mesh 10 to remove at least part of the removable material 102 attached to the screen 10, thereby forming a predetermined pattern on the printing mesh 10.

Specifically, the energy head moves along a movement path on the surface of the printing mesh 10 to transfer electromagnetic energy to the surface of the printing mesh 10, so that the electromagnetic energy can act on the removable material 102 on the printing mesh 10. The removable material 102 at positions of the printing mesh 10 corresponding to the aforementioned movement path will be removed, thereby exposing the screen 200 at these positions, and ultimately obtaining a printing mesh 10 with a predetermined pattern.

The patterns referred to in the method according to the embodiments of the present application are not limited to graphic images, but also include texts, lines, graphic-text designs, and other expressive forms with a strong sense of design.

Referring to FIG. 11, in an embodiment, prior to step of operating the printing mesh 10 by using the energy apparatus 30, the method further includes step S11: providing a screen stretching frame, and tensioning and securing the printing mesh 10 in the screen stretching frame.

In this embodiment, prior to operating the printing mesh 10, the printing mesh 10 is first tensioned and secured in the screen stretching frame. Subsequently, the screen stretching frame in which the printing mesh 10 (or a screen mesh) is tensioned and secured is placed in the processing area of the energy apparatus 30. Since the energy apparatus 30 is provided with an energy head 301 capable of generating electromagnetic energy, the electromagnetic energy generated by the energy head 301 can be transferred to the surface of the printing mesh 10 for processing the printing mesh 10.

It should be noted that there is no strict sequence between step S11 and step S20, and the two steps can also be performed simultaneously.

As shown in FIG. 12, in step S30, prior to step of moving the energy head along a predetermined movement path on a surface of the printing mesh 10, the method further includes step S31:
obtaining the predetermined pattern via a terminal device 40 connected to the energy apparatus 30 or a storage unit inside the energy apparatus 30. The predetermined pattern may be one that the user uploads or copies to the terminal device 40 or the energy apparatus 30, or the predetermined pattern may be drawn in real time by the user on the terminal device 40 such as a computer, a tablet, or a mobile phone connected to the energy apparatus 30.

Further, the method further includes step S32: generating a movement plan for the energy head 301 based on the predetermined pattern, where the movement plan includes a movement path of the energy head 301. The movement path may be generated in the terminal device 40 connected to the energy apparatus 30. Alternatively, the movement path may also be generated in a processing unit inside the energy apparatus 30.

The movement path can serve as a movement path of the energy head in the energy apparatus 30 along the X axis and the Y axis.

In an embodiment, in step S30 above, prior to moving the energy head along a predetermined movement path on a surface of the printing mesh 10, the method further includes step S33:
adjusting an action point of the electromagnetic energy based on a distance between the energy head and the printing mesh 10 and/or the thickness of the printing mesh 10, and the thickness of a surface material of the printing mesh 10.

For example, the energy apparatus 30 can adjust a focal position of the laser beam based on parameters such as a distance between the energy head and the printing mesh 10 and/or the thickness of the printing mesh 10, and the thickness of the surface material of the printing mesh 10. Thus, the laser beam can be focused at a predetermined height and act at a most suitable position on the printing mesh 10 to achieve a predetermined removal effect, that is, the removable material 102 is removed without damaging the mesh.

In this example, the energy apparatus 30 may further include a detection unit that can detect the parameters such as a distance between the energy head and the printing mesh 10 and/or the thickness of the printing mesh 10, and the thickness of the surface material of the printing mesh 10. The detection unit includes, but is not limited to, a laser detection sensor, an X-ray detection sensor, a γ-ray detection sensor, an ultrasonic detection sensor, and so on.

It can be understood that there is no strict sequence between step S32 and step S33 above, and the two steps can also be performed simultaneously.

In the method for making a screen printing plate provided in the embodiments of the present application, for users who own the laser engraving/cutting machine, they only need to place the printing mesh 10 in a processing area of the laser processing equipment, select a desired pattern in the terminal device 40 connected to the laser processing equipment, and start the laser processing equipment to process the printing mesh 10 based on the user-selected pattern. In this case, an engraving path of the laser processing equipment corresponds to the user-selected pattern. In this way, a printing mesh 10 with a user-expected pattern can be made, and then the user can use this printing mesh 10 to print desired patterns on various substrates. For example, the user may use a screen printing machine and a squeegee in combination to print the pattern onto a designated item via scrape coating of ink on the printing mesh 10 with the expected pattern. The method for making a screen printing plate in the present application can achieve automated screen printing plate making, with a simple and fast plate-making process and short plate-making time. The plate making can be independently completed by the user anywhere, and is low in cost with high efficiency and precision.

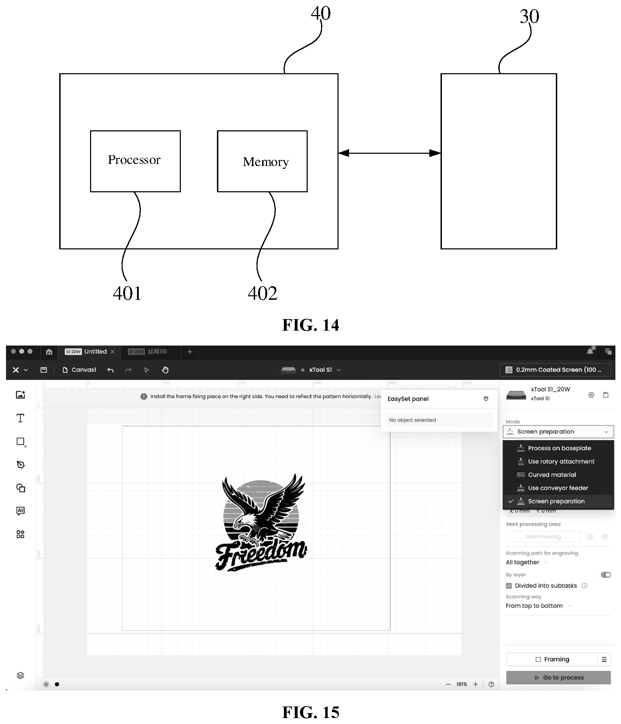

Referring to FIG. 14, another objective of the present application is to provide a terminal device 40 for making a screen printing plate, including a processor 401 and a memory 402. A computer program is stored in the memory 402, and the computer program is configured to be executed by the processor 401. When the processor 401 executes the computer program, the method for making a screen printing plate as described in any one of the foregoing is implemented.

In the embodiments of the present application, the terminal device 40 may be a desktop computer, a laptop, a handheld computer, a cloud server, or another computing device. The terminal device 40 may include, but is not limited to, the processor 401 and the memory 402. Those skilled in the art can understand that the schematic diagram is merely an example of the terminal device 40 for making a screen printing plate and does not limit the terminal device 40 for making a screen printing plate. The terminal device 40 may include more or fewer components than those shown, a combination of some components, or different components. For example, the terminal device 40 for making a screen printing plate may further include an input/output device, a network access device, a bus, and so on.

The processor 401 may be a central processing unit (CPU), or another general-purpose processor, digital signal processor (DSP), application specific integrated circuit (ASIC), etc. The processor 401 is a control center of the terminal device 40 for making a screen printing plate, connecting various parts of the entire terminal device 40 for making a screen printing plate via various interfaces and circuits.

The memory 402 is configured to store a computer program, or includes a module loaded with the computer program. The computer program or the module stored in the memory 402, when executed by the processor 401, can implement steps of the above method embodiments.

In the embodiments of the present application, the memory 402 may be a hard disk, a memory, a smart media card (SMC), a flash card, a flash memory device, etc.

It should be understood that if the module or unit integrated in the terminal device 40 for making a screen printing plate is implemented in the form of a software functional unit and sold or used as an independent product, it can be stored in a computer-readable storage medium. The computer-readable medium may include any entity or device capable of carrying the aforementioned computer program codes, a recording medium, a USB flash drive, a portable hard drive, a magnetic disk, an optical disk, a computer memory, a read-only memory (ROM), a random access memory (RAM), etc.

Another objective of the present application is to provide a system for making a screen printing plate, including a printing mesh 10, an energy generator, a controller, and a memory. The printing mesh 10 includes a screen 200 and a removable material 102 attached to the screen 200, where the removable material 102 can be removed under the action of electromagnetic energy, and the screen 200 can be completely or partially retained under the action of the electromagnetic energy.

The energy generator can emit electromagnetic energy to the printing mesh 10. The energy generator may be a laser emission head, which can be moved automatically on a surface of the printing mesh 10 by a machine to remove at least part of the removable material 102 attached to the screen 200, or may be moved manually by a user to remove at least part of the removable material 102 attached to the screen 200. By way of example, as shown in FIG. 13, the energy generator may be a movable laser processing head in a laser processing equipment. In the embodiment where the user manually moves the laser emission head, the laser emission head may be mounted with a handle to facilitate use and operation by the user.

The controller is electrically connected to the energy generator to control the energy generator to move along a predetermined movement path on the surface of the printing mesh 10, so as to remove at least part of the removable material 200 attached to the screen 100 and form a predetermined pattern on the printing mesh 10. The controller may be a programmable logic controller (PLC), etc.

The memory is electrically connected to the controller and is configured to store computer instructions. When the computer instructions are executed, the method for making a screen printing plate described in any one of the above embodiments is implemented. The memory may be a hard disk, a memory, a smart media card (SMC), a flash card, a flash memory device, etc.

Another objective of the present application is to provide a system for making a screen printing plate, to perform the method for making a screen printing plate as described in any one of the foregoing. The system includes a printing mesh 10 and an energy apparatus 30. The printing mesh 10 includes a screen 200 and a removable material 102 attached to the screen 200, where the removable material 102 can be removed under the action of electromagnetic energy, and the screen 200 can be completely or partially retained under the action of the electromagnetic energy.

The energy apparatus 30 includes an energy head 301 capable of emitting the electromagnetic energy. The energy apparatus 30 may be a laser processing equipment.

Referring to FIG. 15 to FIG. 17, when the system for making a screen printing plate according to the embodiments of the present application performs the method for making a screen printing plate as described in any one of the foregoing, a processing mode, processing parameters, and a processed material for the energy apparatus 30 can be selected via different control interfaces. After all items are selected, the energy apparatus 30 can process the printing mesh 10 based on a preset mode or parameters.

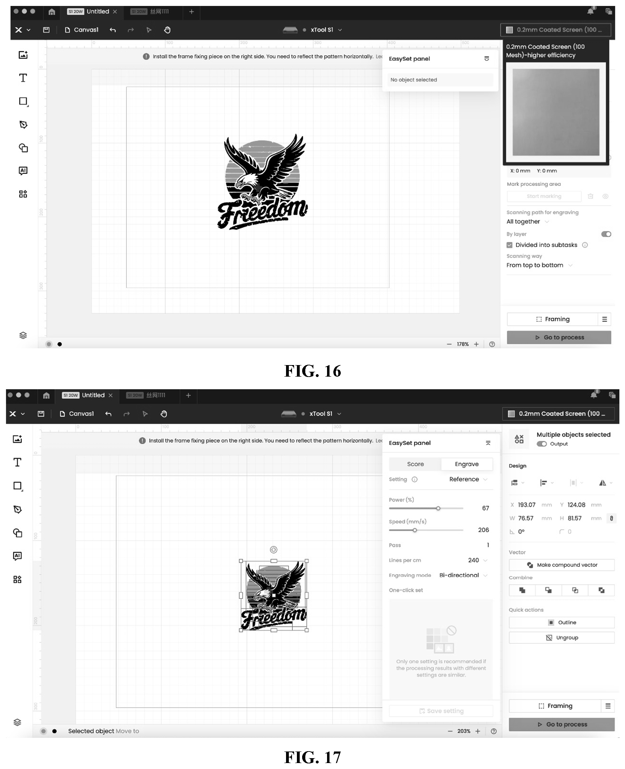

Specifically, FIG. 15 shows a control interface for selecting a processing mode of an energy apparatus 30; FIG. 16 shows a control interface for selecting a material to be processed by an energy apparatus 30; and FIG. 17 shows a control interface for selecting processing parameters of an energy apparatus 30.

For specific implementation of the above operations, reference can be made to the previous embodiments and will not be repeated here. It can be understood that those of ordinary skill in the art may make equivalent substitutions or modifications based on the technical solutions and inventive concepts of the present application, and all such modifications or substitutions should fall within the scope of protection of the claims appended to the present application.

## Claims

1. A printing mesh, comprising a screen and a removable material, wherein the removable material is capable of being completely removed under an action of electromagnetic energy, and the screen is capable of being completely or partially retained under the action of the electromagnetic energy; and
the screen has mesh openings filled with the removable material, and the removable material covers a surface of the screen to form a removable layer.

2. A printing mesh, comprising a screen and a removable material, wherein the removable material is capable of being completely removed under the action of electromagnetic energy, and the screen is capable of being completely or partially retained under the action of the electromagnetic energy; and
the screen has mesh openings filled with the removable material, or the removable material covers a surface of the screen to form a removable layer.

3. The printing mesh according to claim 1 or 2, wherein the screen is a metal screen.

4. The printing mesh according to claim 1 or 2, wherein the removable material is a photosensitive resin material.

5. The printing mesh according to claim 1 or 2, wherein the electromagnetic energy is laser.

6. The printing mesh according to claim 1 or 2, wherein a melting point, an ignition point, or a sublimation point of the screen is higher than a melting point, an ignition point, or a sublimation point of the removable material.

7. The printing mesh according to claim 1 or 2, wherein the screen has an upper surface and a lower surface which are in communication through the mesh openings, and the removable layer is laminated on the upper surface and the lower surface.

8. The printing mesh according to claim 1 or 2, wherein the screen has an upper surface and a lower surface which are in communication through the mesh openings, and the removable layer is laminated on the upper surface or the lower surface.

9. The printing mesh according to claim 1 or 2, further comprising an edge-wrapping structure, wherein the edge-wrapping structure wraps an edge of the printing mesh.

10. A printing mesh, comprising a screen, a first material, and a second material, wherein the first material is capable of being completely removed under the action of electromagnetic energy, the second material is capable of being dissolved by a solvent and covers a surface of the screen, and the first material is laminated on a surface of a layer structure formed by the second material.

11. A printing mesh, which is a single-layer mesh structure made of a material capable of being removed by electromagnetic energy.

12. A method for making a screen printing plate, comprising:
providing a printing mesh, wherein the printing mesh comprises a screen and a removable material attached to the screen, the removable material is capable of being removed under the action of electromagnetic energy, and the screen is capable of being completely or partially retained under the action of the electromagnetic energy;
providing an energy apparatus, wherein the energy apparatus is provided with an energy head capable of emitting the electromagnetic energy; and
operating the printing mesh by using the energy apparatus: placing the printing mesh in a processing area of the energy apparatus, and moving the energy head along a predetermined movement path on a surface of the printing mesh to remove at least part of the removable material attached to the screen, thereby forming a predetermined pattern on the printing mesh.

13. The method for making a screen printing plate according to claim 12, wherein prior to step of moving the energy head along a predetermined movement path on a surface of the printing mesh, the method further comprises:
obtaining the predetermined pattern via a terminal device connected to the energy apparatus or a storage unit inside the energy apparatus; and
generating the movement path based on the predetermined pattern.

14. The method for making a screen printing plate according to claim 12, wherein prior to step of moving the energy head along a predetermined movement path on a surface of the printing mesh, the method further comprises:
adjusting an action point of the electromagnetic energy based on a distance between the energy head and the printing mesh and/or the thickness of the printing mesh, and the thickness of a surface material of the printing mesh.

15. The method for making a screen printing plate according to claim 12, wherein prior to step of operating the printing mesh by using the energy apparatus, the method further comprises:
providing a screen stretching frame, and tensioning and securing the printing mesh in the screen stretching frame.

16. The method for making a screen printing plate according to claim 12, wherein the energy apparatus is a laser processing equipment, and the energy head is a movable laser processing head.

17. The method for making a screen printing plate according to claim 16, wherein the laser processing equipment processes the printing mesh with laser having a wavelength of 400 nm to 10.6 µm.

18. The method for making a screen printing plate according to claim 16, wherein the size of a light spot formed by the laser processing equipment on the printing mesh does not exceed 0.08 mm².

19. The method for making a screen printing plate according to claim 16, wherein in step of moving the energy head along a predetermined movement path on a surface of the printing mesh, a movement speed of the laser processing head is greater than 80 mm/s.

20. The method for making a screen printing plate according to claim 16, wherein power of the laser processing equipment is below 100 W.

21. The method for making a screen printing plate according to claim 16, wherein the laser processing equipment comprises processing modes of laser planar processing, laser curved surface processing, and laser screen printing plate making; and
prior to step of moving the energy head along a predetermined movement path on a surface of the printing mesh, the method further comprises:
selecting a laser processing mode: selecting the processing mode of the laser planar processing or the laser screen printing plate making to operate the printing mesh.

22. The method for making a screen printing plate according to claim 21, wherein after step of selecting a laser processing mode, the method further comprises:
configuring power and speed of laser processing based on the laser processing mode.
